# EUROPEAN PATENT SPECIFICATION

(11) **EP 1 266 773 B1**
(45) Date of publication and mention of the grant of the patent: **11.02.2009**
(21) Application number: 02013151.2
(22) Date of filing: 14.06.2002
(51) Int. Cl.: B60G 7/02, B62D 21/00

(54) **Automobile body frame structure**
Karosserierahmenstruktur für Kraftfahrzeug
Structure de chassis pour véhicule automobile

(30) Priority: 15.06.2001 JP 2001182509
(43) Date of publication of application: 18.12.2002
(60) Divisional application: 08009245.5
(73) Proprietor: HONDA GIKEN KOGYO KABUSHIKI KAISHA, Minato-ku, Tokyo (JP); F.Tech Incorporation, Minami-Saitama-gun, Saitama (JP)
(72) Inventor: Watanabe, Toshimichi, K.K.Honda Gijutsu Kenkyusho, Wako-shi, Saitama (JP); Hirai, Hideki, K. K. Honda Gijutsu Kenkyusho, Wako-shi, Saitama (JP); Seo, Kazuya, Haga Kenkyusho of F.Tech Incorp., Haga-gun, Tochigi (JP)
(74) Representative: Prechtel, Jörg

(56) References cited:
- EP-A- 0 265 675
- DE-U1- 8 616 013
- FR-A- 2 767 750
- US-A- 4 059 286
- US-A- 5 398 411
- PATENT ABSTRACTS OF JAPAN vol. 2000, no. 03, 30 March 2000 (2000-03-30) -& JP 11 334332 A (DAIHATSU MOTOR CO LTD), 7 December 1999 (1999-12-07)
- PATENT ABSTRACTS OF JAPAN vol. 1996, no. 10, 31 October 1996 (1996-10-31) -& JP 08 156829 A (DAIHATSU MOTOR CO LTD), 18 June 1996 (1996-06-18)
- PATENT ABSTRACTS OF JAPAN vol. 1999, no. 03, 31 March 1999 (1999-03-31) -& JP 10 316012 A (TOYOTA MOTOR CORP), 2 December 1998 (1998-12-02)
- PATENT ABSTRACTS OF JAPAN vol. 2000, no. 15, 6 April 2001 (2001-04-06) -& JP 2000 343921 A (DAIHATSU MOTOR CO LTD), 12 December 2000 (2000-12-12)
- PATENT ABSTRACTS OF JAPAN vol. 012, no. 448 (M-768), 24 November 1988 (1988-11-24) -& JP 63 180509 A (TOYOTA MOTOR CORP), 25 July 1988 (1988-07-25)
- PATENT ABSTRACTS OF JAPAN vol. 1997, no. 07, 31 July 1997 (1997-07-31) -& JP 09 066720 A (TOYOTA MOTOR CORP), 11 March 1997 (1997-03-11)
- PATENT ABSTRACTS OF JAPAN vol. 2000, no. 08, 6 October 2000 (2000-10-06) -& JP 2000 130485 A (MUSASHI SEIMITSU IND CO LTD), 12 May 2000 (2000-05-12)

## Description

### BACKGROUND OF THE INVENTION

### FIELD OF THE INVENTION

The present invention relates to an automobile body frame structure in which a suspension arm is supported in a sub-frame and the sub-frame is mounted on a main frame.

### DESCRIPTION OF THE RELATED ART

In a known arrangement for supporting an engine and a suspension arm in an automobile body frame, the engine and the suspension arm are mounted on a sub-frame in advance so as to form a sub-assembly, and the sub-frame is then mounted as a unit on the main frame of the body. In this case, separate bolts are used to secure a rubber bush joint provided on the base of the suspension arm to the sub-frame and to secure the sub-frame to the main frame, and the bolts are not shared.

However, when separate bolts are employed for securing the rubber bush joint of the suspension arm to the sub-frame and for securing the sub-frame to the main frame, for example, a total of eight bolts are required, that is, two bolts on the left and two on the right for securing two rubber bush joints of each of left and right suspension arms (lower arms) and two bolts on the left and two on the right for securing the sub-frame to left and right front side frames (main frames). If these 8 bolts can be decreased in number, both the number of components and the number of assembling steps can be reduced, thereby contributing to a reduction in the cost.

An automobile body frame structure according to the preamble part of claim 1 is known from EP-A-0 265 675.

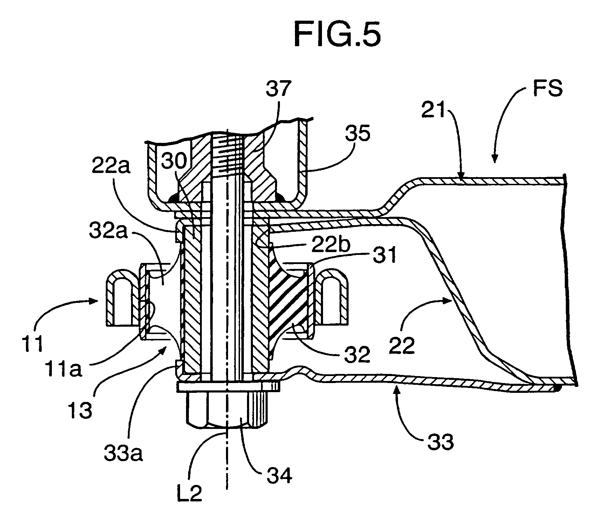

The positioning part of the known structure consists of two parallel insert parts 41 shown in figure 5 with a shape of a plate to be inserted in a respective hole of the upper panel at the upper end of the inner tube and the lower panel at the lower end of the inner tube. Each plate is provided with the axial extending rib 42 following a half circle and which in the mounted situation contacts the outer periphery of the inner tube. The two blades are oriented such that the suspension arm 2 which carries the joint can be mounted in an inclined orientation as shown in figure 6. After rotation of the suspension arm into the normal configuration, the rib 42 holds the inner tube in place.

According to this prior art separate molded insert parts have to be manufactured and mounted in a specific orientation to the upper and lower panel. Furthermore, a specific way of mounting the suspension arm by combining a transversal movement and a subsequent pivoting movement is prescribed.

JP-A-11 334 332 discloses an inner tube formed by a downwardly extending collar of a complex shaped part 8b which is inserted in a hole of the subframe. JP-A-08 156 829 discloses a rubber bush joint 3 held in position within the bracket-shaped subframe 1 only by means of the bolt 5. FR-A-2 767 750 discloses an inner tube 10 held in place within the bracket-shaped sub-frame 2 by means of a separate part 11 surrounding the bolt 3 and extending through circular openings 5, 6 of the sub-frame 2. JP-A-2000 343921 discloses a rubber bush joint positioned within the bracket-shaped subframe 5 by means of a cylindrical steel part 30, 30 surrounding the bolt 14 and an auxiliary rubber body 27 surrounding the part 30 and being inserted into the inner tube 11 and extending through respective circular holes of the upper and the lower subframe 15, 16. According to JP-A- 63 180509 the inner tube 48 is only held in position within the sub-frame 14 by means of the bolt 40 (figure 2). In accordance to US-A- 4 059 286 the inner tube 43 is only held in position within the sub-frame 1 by means of the bolt 41. JP-A- 10 316012 discloses in figures 1 and 4, a solid protrusion 70 formed on the lower panel 16. Only after inserting the bolt 64 is the inner tube 58 held in place between the protrusion and the bolt. This protrusion cannot be formed by simple bending or cutting the lower panel, but necessitates a respective shaping process by moulding.

### SUMMARY OF THE INVENTION

The object of the invention is to provide an automobile body frame structure according to the preamble part of claim 1 which allows a precise positioning of the rubber bush joint with respect to the sub-frame and which is simple in construction and handling.

This object is solved by the features of claim 1. The positioning part is formed by only bending and cutting the lower panel. Thus, no separate parts with complex structure have to be manufactured and mounted in a prescribed orientation as taught by the prior art. For mounting the suspension arm to the sub-frame, it is only necessary to snap the inner tube into the positioning part. No specific mounting steps including rotation of the suspension arm are necessary as in the prior art. Furthermore, the inner tube is held in place independent of the bolt.

The suspension arm of the present invention corresponds to a lower arm 11 of an embodiment, the joints of the present invention correspond to front and rear rubber bush joints 12 and 13 of the embodiment, the positioning part of the present invention corresponds to a positioning flange 22a, a positioning step 22b, and a positioning flange 33a of the embodiment, the sub-frame of the present invention corresponds to a front sub-frame FS of the embodiment, and the main frame of the present invention corresponds to front side frames FL and FR of the embodiment.

The above-mentioned object, other objects, characteristics and advantages of the present invention will become apparent from an explanation of the preferred embodiment that will be described in detail below by reference to the attached drawings.

### BRIEF DESCRIPTION OF THE DRAWINGS

FIGS. 1 to 5 show one embodiment of the present invention.
FIG. 1 is a top view of a front sub-frame and lower arms.
FIG. 2 is a cross section along 2-2 in FIG. 1.
FIG. 3 is an enlarged top view of a lower arm.
FIG. 4 is a cross section along line 4-4 in FIG. 2.
FIG. 5 is a cross section along line 5-5 in FIG. 2.

### DESCRIPTION OF THE PREFERRED EMBODIMENT

An embodiment of the present invention is explained below by reference to the attached drawings.

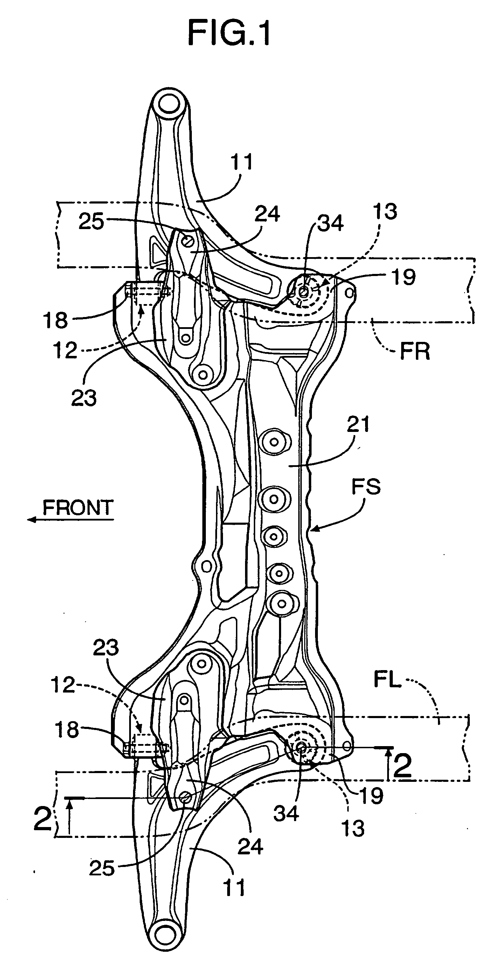

Referring to FIG. 1, a pair of left and right front side frames FL and FR are disposed in a front part of an automobile body in the longitudinal direction, and a front sub-frame FS is secured to the lower faces of the front side frames FL and FR so as to bridge them. Mounted in advance on the upper face of the front sub-frame FS are an engine and a transmission (not illustrated), and attached to each of the left and right sides of the front sub-frame FS is a front suspension lower arm 11.

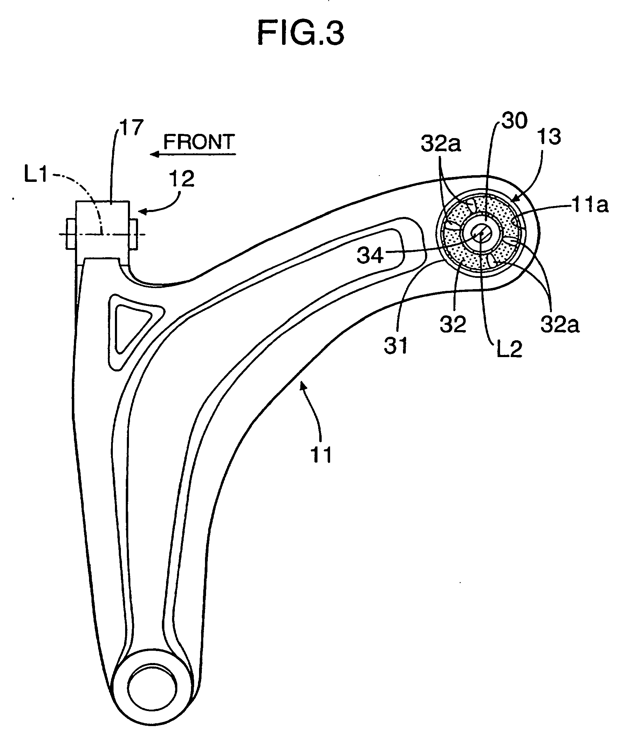

As is clear from FIG. 3, the lower arm 11 is produced by press-forming a metal sheet and is a so-called A type arm. The lower arm 11 includes a front rubber bush joint 12 and a rear rubber bush joint 13 on the side facing the front sub-frame FS, and a ball joint (not illustrated) that is connected to a knuckle at the end on the side opposite to the front sub-frame FS. The axis L1 of the front rubber bush joint 12 is in the longitudinal direction of the vehicle body, and the axis L2 of the rear rubber bush joint 13 is in the vertical direction.

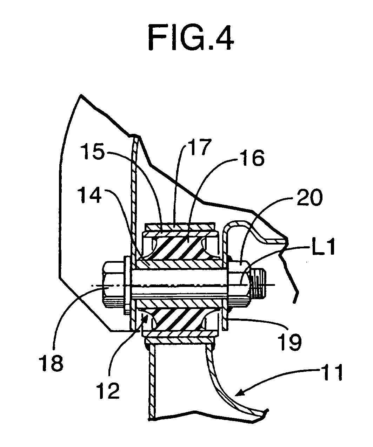

As is clear from FIG. 4, the front rubber bush joint 12 is formed by connecting a metal inner tube 14 and a metal outer tube 15 via a rubber bush 16. The outer tube 15 is inserted under pressure into a support tube 17 provided in a front part of each of the lower arms 11. A bolt 18 running through the inner tube 14 in the longitudinal direction further runs through a support 19 and is tightened with a nut 20, the support 19 having an inverted U-shaped cross section and being integrally formed with the front sub-frame FS at a position toward the front end of each of the left and right sides of the frame FS.

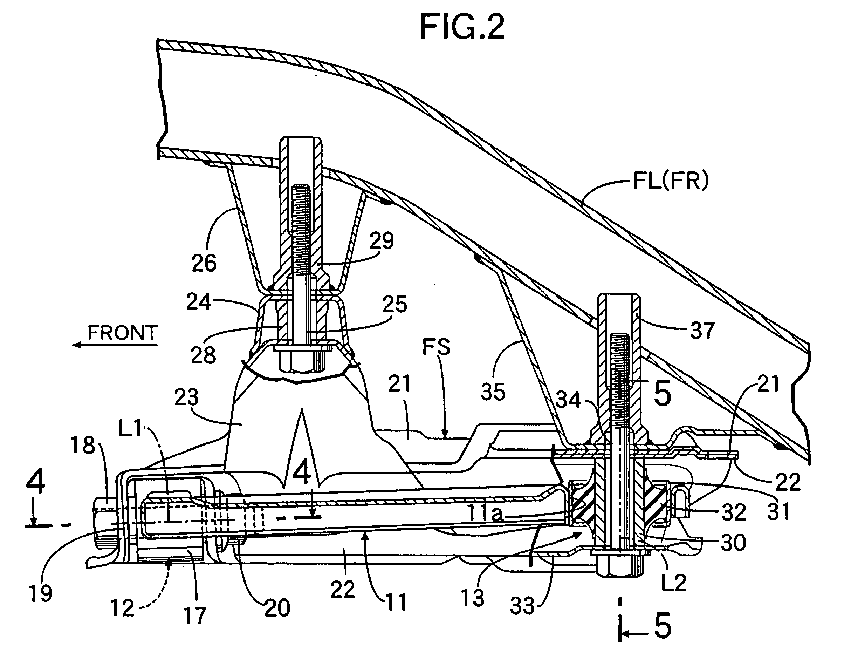

As is clear from FIGS. 1 and 2, the front sub-frame FS is basically formed by joining an upper panel 21 and a lower panel 22 at their peripheries. A body mounting part 23 projects obliquely upward from the upper face of each of the left and right sides of the upper panel 21, the body mounting part 23 being a member separate from the upper panel 21. A mounting bracket 24 is welded to the upper face of each of the body mounting parts 23. The left and right front side frames FL and FR are curved so that their front parts are higher than their rear parts, and the lower face of the higher part of each of the left and right front side frames FL and FR is in contact with the upper face of the corresponding mounting bracket 24.

A bolt 25 is inserted from beneath into each of the body mounting parts 23 of the front sub-frame FS, runs through both the corresponding mounting bracket 24 welded to the upper face of the body mounting part 23 and a mounting bracket 26 welded to the lower face of the corresponding one of the left and right front side frames FL and FR, and is tightened with a nut 29 welded to the interior of the mounting bracket 26. This bolt 25 runs through a collar 28 provided within the mounting bracket 24 of the front sub-frame FS.

As is clear from FIG. 5, the rear rubber bush joint 13 is formed by connecting a metal inner tube 30 and a metal outer tube 31 via a rubber bush 32, and four cavities 32a are formed in the rubber bush 31. The upper panel 21 and the lower panel 22 of the front sub-frame FS are superimposed on each other at positions near the rear ends of the left and right sides, and a sheet-form support bracket 33 is welded to the lower face of the lower panel 22. A positioning flange 22a is formed by bending the periphery of the lower panel 22 downward, and a positioning step 22b is formed by cutting a part of the lower panel 22. The positioning flange 22a and the positioning step 22b position the upper end of the inner tube 30 of the rear rubber bush joint 13. The lower end of the inner tube 30 of the rear rubber bush joint 13 is positioned by a positioning flange 33a formed by bending upward the periphery of the support bracket 33. The outer tube 31 of the rear rubber bush joint 13 is inserted under pressure into a circular mounting hole 11a formed in the rear end of the lower arm 11.

A bolt 34 is inserted from beneath into each of the support brackets 33 of the front sub-frame FS, runs through the inner tube 30 of the rear rubber bush joint 13, the lower panel 22 and the upper panel 21 of the front sub-frame FS, and the corresponding mounting bracket 35 provided on the lower face of each of the left and right front side frames FL and FR, and is tightened with a nut 37 welded to the interior of the mounting bracket 35. Since the inner diameter of the inner tube 30 of the rear rubber bush joint 13 is larger than the outer diameter of the bolt 34, the position at which the front sub-frame FS and the rear rubber bush joint 13 are mounted on each of the front side frames FL and FR can be finely adjusted.

As described above, since the front sub-frame FS is mounted on the left and right front side frames FL and FR using the two bolts 34 that are used for mounting the rear rubber bush joints 13 on the front sub-frame FS, the number of bolts can be reduced by two in comparison with a case in which a front sub-frame FS and front side frames FL and FR are joined to each other by bolts that are separate from two bolts 34 used for mounting rear rubber bush joints 13 on the front sub-frame FS, so that the number of assembling steps and the cost can be reduced. Furthermore, since the upper end of the inner tube 30 of the rear rubber bush joint 13 is positioned by the positioning flange 22a and the positioning step 22b of the lower panel 22, and the lower end of the inner tube 30 of the rear rubber bush joint 13 is positioned by the positioning flange 33a of the support bracket 33, the position of the rear rubber bush joint 13 can be precisely determined with respect to the front sub-frame FS.

In the embodiment, the present invention is applied to the front sub-frame FS, but it can be applied to a rear sub-frame on which a fuel tank and a rear suspension are mounted.

In the embodiment, the lower arms 11 are illustrated as an example of the suspension arm, but the present invention can be applied to any suspension arm as well as the lower arms 11.

Although one embodiment of the present invention is explained in detail above, the present invention can be modified in a variety of ways without departing from the spirit and scope of the present invention, as defined in the appended claim.

An automobile body frame structure has an arrangement in which a suspension lower arm is supported in a front sub-frame and the front sub-frame is mounted on main frames. Among a front rubber bush joint and a rear rubber bush joint of the lower arm which are supported in the sub-frame, the axis of the rear rubber bush joint is in the vertical direction. Securing the front sub-frame to the main frame using a bolt that is used for mounting the rubber bush joint on the front sub-frame reduces the number of bolts, thereby reducing the number of assembling steps and the cost.

## Claims

1. An automobile body frame structure comprising a sub-frame. (FS), a suspension arm (11) supported in the sub-frame (FS), and a main frame (FL, FR), on which the sub-frame (FS) is mounted, the suspension arm (11) comprising:
a plurality of joints (12, 13), the axis of at least one of the joints being disposed in the vertical direction; and
a bolt (34) for securing said at least one joint (13) to the sub-frame (FS), the bolt (34) being also used for securing the sub-frame (FS) to the main frame (FL, FR),
wherein said at least one joint (13) is a rubber bush joint in which an inner tube (30) and an outer tube (31) are connected to each other via a rubber bush (32),
wherein said sub-frame (FS) comprises an upper panel (21), a lower panel (22), and a positioning part (22a, 22b, 33a) for positioning the inner tube (30),
**characterized in**
**that** said sub-frame (FS) further comprises a support bracket (33) for supporting a lower face of the at least one joint (13),
wherein said upper panel (21) and said lower panel (22) are superimposed on each other at positions near their left and right sides, and said positioning part comprises a positioning flange (22a) formed by bending a periphery of said lower panel (22), a positioning step (22b) formed by cutting a part of the lower panel (22), and a positioning flange (33a) formed by bending upward a periphery of the support bracket (33).

## Patentansprüche

1. Kraftfahrzeugkörper-Rahmenstruktur umfassend:
einen Hilfsrahmen (FS), einen Aufhängungslenker (11), der in dem Hilfsrahmen (FS) gelagert ist, sowie einen Hauptrahmen (FL, FR), an dem der Hilfsrahmen (FS) angebracht ist, wobei der Aufhängungslenker (11) umfasst:
eine Mehrzahl von Gelenken (12, 13), wobei die Achse zumindest eines der Gelenke in der vertikalen Richtung angeordnet ist; und
einen Bolzen (34) zum Sichern des zumindest einen Gelenks (13) an dem Hilfsrahmen (FS), wobei der Bolzen (34) auch zum Sichern des Hilfsrahmens (FS) an dem Hauptrahmen (FL, FR) verwendet wird,
worin das zumindest eine Gelenk (13) ein Gummibuchsengelenk ist, in dem ein Innenrohr (30) und ein Außenrohr (31) über eine Gummibuchse (32) miteinander verbunden sind,
worin der Hilfsrahmen (FS) eine obere Tafel (21), eine untere Tafel (22) sowie ein Positionierungsteil (22a, 22b, 33a) zum Positionieren des Innenrohrs (30) aufweist,
**dadurch gekennzeichnet, dass**
ein Hilfsrahmen (FS) ferner einen Stützträger (33) aufweist, um eine Unterseite des zumindest einen Gelenks (13) zu stützen,
worin die obere Tafel (21) und die untere Tafel (22) an ihren linken und rechten Seiten benachbarten Positionen aufeinander gelegt sind, und das Positionierungsteil einen Positionierungsflansch (22a), der durch Umbiegen eines Umfangs der unteren Tafel (22) gebildet ist, eine Positionierungsstufe (22b), die durch Abschneiden eines Teils der unteren Tafel (22) gebildet ist, sowie einen Positionierungsflansch (33a), der durch Aufwärtsbiegen eines Umfangs des Stützträgers (33) gebildet ist, aufweist.

## Revendications

1. Structure de châssis d'automobile comprenant un châssis secondaire (FS), un bras de suspension (11) supporté dans le châssis secondaire (FS), et un châssis principal (FL, FR), sur lequel le châssis secondaire (FS) est monté, le bras de suspension (11) comprenant :
une pluralité d'articulations (12, 13), l'axe d'au moins l'une des articulations étant disposé dans la direction verticale ; et
un boulon (34) pour fixer ladite au moins une articulation (13) au châssis secondaire (FS), le boulon (34) étant également utilisé pour fixer le châssis secondaire (FS) au châssis principal (FL, FR),
dans laquelle ladite au moins une articulation (13) consiste en une articulation à bague en caoutchouc
dans laquelle un tube intérieur (30) et un tube extérieur (31) sont reliés l'un à l'autre par l'intermédiaire d'une bague en caoutchouc (32),
dans laquelle ledit châssis secondaire (FS) comprend un panneau supérieur (21), un panneau inférieur (22), et une partie de positionnement (22a, 22b, 33a) pour positionner le tube interne (30),
**caractérisée en ce que**
ledit châssis secondaire (FS) comprend en outre un support (33) pour supporter une face inférieure de ladite au moins une articulation (13),
dans laquelle ledit panneau supérieur (21) et ledit panneau inférieur (22) sont superposés l'un à l'autre à des positions à proximité de leurs côtés gauche et droit, et ladite partie de positionnement comprend un rebord de positionnement (22a) formé en pliant une périphérie dudit panneau inférieur (22), un gradin de positionnement (22b) formé en découpant une partie du panneau inférieur (22), et un rebord de positionnement (33a) formé en pliant vers le haut une périphérie du support (33).
